# EUROPEAN PATENT SPECIFICATION

(11) **EP 3 488 989 B1**
(45) Date of publication and mention of the grant of the patent: **09.12.2020**
(21) Application number: 18207328.8
(22) Date of filing: 08.07.2014
(51) Int. Cl.: B29C 45/28, B29C 45/76, B29C 45/77

(54) **NON-COAXIALLY MOUNTED ELECTRIC ACTUATOR AND TRANSMISSION**
NICHT KOAXIAL MONTIERTE ELEKTRISCHER AKTUATOR UND GETRIEBE
ACTIONNEUR ÉLECTRIQUE ET TRANSMISSION MONTÉS DE FAÇON NON COAXIALE

(30) Priority: 08.07.2013 US 201361843561 P
(43) Date of publication of application: 29.05.2019
(62) Divisional of application: 18152031.3
(73) Proprietor: Synventive Molding Solutions, Inc., Peabody, MA 01960 (US)
(72) Inventor: Galati, Vito, Rowley, MA 01969 (US)
(74) Representative: Fuchs Patentanwälte Partnerschaft mbB

(56) References cited:
- EP-A1- 2 679 374
- WO-A1-2010/128984
- WO-A1-2012/074879
- US-B1- 6 294 122

## Description

### BACKGROUND OF THE INVENTION

Injection molding systems powered electric actuators have been developed having a drive rotor with an axis aligned with the axis of a valve pin to cause the pin to move either upstream or downstream over the course of the injection portion of an injection cycle in order to raise or lower the rate of flow of fluid material to correspond to a predetermined profile of fluid flow rates for the injection cycle.

Documents US 8 091 202 B2 and US 6 294 122 B1 disclose an injection molding machine for controlling movement of a pin, comprising a plastic melt flow channel having an output end for delivering molten plastic injected into the channel under pressure to a mold cavity, wherein the pin comprises an elongated rod having an axis and an end. The pin is slidably mounted within the channel for movement along its axis within the channel. An electrically driven motor is drivably interconnected to an actuating mechanism, wherein the actuating mechanism is drivably interconnected to the end of the pin. The motor is controllably drivable to drive the pin through movement along its axis within the channel.

### SUMMARY OF THE INVENTION

In accordance with the invention there is provided an apparatus according to claim 1 and a method according to claim 10.

### Brief Description of the Drawings

The above and further advantages of the invention may be better understood by referring to the following description in conjunction with the accompanying drawings in which:
Fig. 1 is a schematic cross-section of an embodiment of the invention showing an actuator comprised of an electric motor and gear box where the housing of the motor is fixedly and removably attached to the upstream top clamping plate of the system.
Fig. 2 is a schematic cross-section of another embodiment of the invention where the housing of the gear box is fixedly and removably attached to the upstream top clamping or mounting plate of the system.
Fig. 3 is a cross-sectional view of an assembled injection molding system comprised of an electric actuator having a non-coaxial gear transmission according to the invention.
Fig. 3A is a perspective view of the Fig. 3 system.
Fig. 3B is a perspective, partially cut-away view of the motor, motor housing and components that mount the housing and the valve pin of the Fig. 3 system.
Fig. 4 is a cross-sectional view of an assembled injection molding system comprised of another embodiment of an electric actuator having a non-coaxial gear transmission according to the invention.
Fig. 5 is a perspective view of the Fig. 4 system.
Fig. 6 is a front cross-sectional view of an assembled injection molding system comprised of another embodiment of an electric actuator having a non-coaxial gear transmission according to the invention.
Fig. 7 is a side view of the Fig. 6 system.
Fig. 8 is a perspective view of an assembled injection molding system comprised of another embodiment of an electric actuator having a non-coaxial gear transmission with the motor shaft and transmission assembly shaft connected via pulleys and a belt according to the invention.
Fig. 9 is a perspective view an electric actuator similar to the Fig. 8 actuator where the transmission shaft has a downstream travelling axial shaft that is interconnected to an upstream rotatable shaft, the upstream travelling shaft being adapted to be non-rotatable.
Fig. 10A is an exploded partial schematic view of the pin coupling components of the apparatus shown in Figs. 1-9, in an assembled state.
Fig. 10B is an exploded partial schematic view showing the pin coupling components of the apparatus shown in Figs. 1-9, in a disassembled state;
Fig. 10C is an enlarged schematic view of a valve pin head and a pin head adapter, in an assembled state, according to one embodiment.
Fig. 10D is an exploded view of the pin head and adapter of Fig. 10C in a disassembled state.
Fig. 10E is a perspective view of one embodiment of an electric actuator coupled to a valve pin.
Fig. 10F is a schematic partial cross-sectional view of the actuator and valve pin of Fig. 10E mounted in an injection molding apparatus.
Fig. 10G is a top plan view of the apparatus of Fig. 10E, with the actuator removed.
Figs. 10H-10M illustrate a series of method steps by which an actuator can be decoupled from a valve pin wherein Fig. 10H is a side schematic sectional view (similar to Fig. 10E) showing the actuator and valve pin assembly coupled and mounted in an injection molding apparatus.
Fig. 10I shows the housing of the actuator decoupled from the mounting or clamp plate.
Fig. 10J is a view similar to Fig. 10H after the actuator has been decoupled from the mounting plate and moved radially to the left to decouple the pin connector or adapter from the coupling at the downstream end of the actuator; Fig. 10J is a view similar to Fig. 10I but showing the actuator to being removed from the mounting plate while the valve pin assembly remains behind extended into the manifold.
Fig. 10K is a view similar to Fig. 10J showing the actuator having been moved upstream to a position approaching being removed from within the recess provided in the top clamping or mounting plates in which the actuator is disposed when coupled to the plates.
Fig. 10L is view showing the actuator having been completely removed from its former position disposed within or on the mounting plate leaving the pin stem behind mounted to the manifold.
Fig. 10M is a view showing the top mounting or clamp plates having been removed or decoupled from the mold together with the actuator having been decoupled from the pin connector leaving the pin stem behind mounted to the manifold.

### Detailed Description

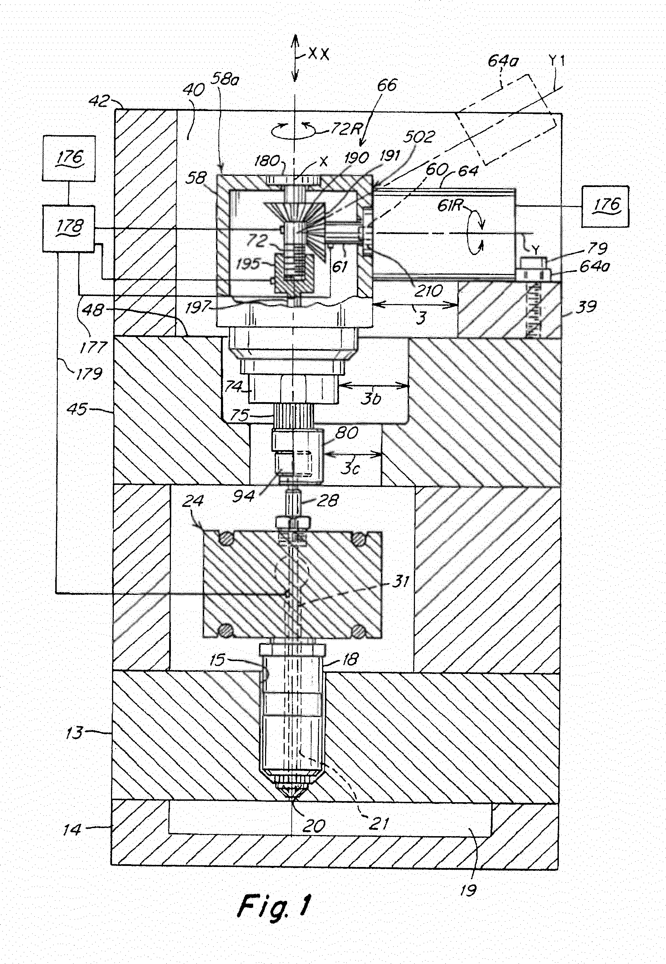

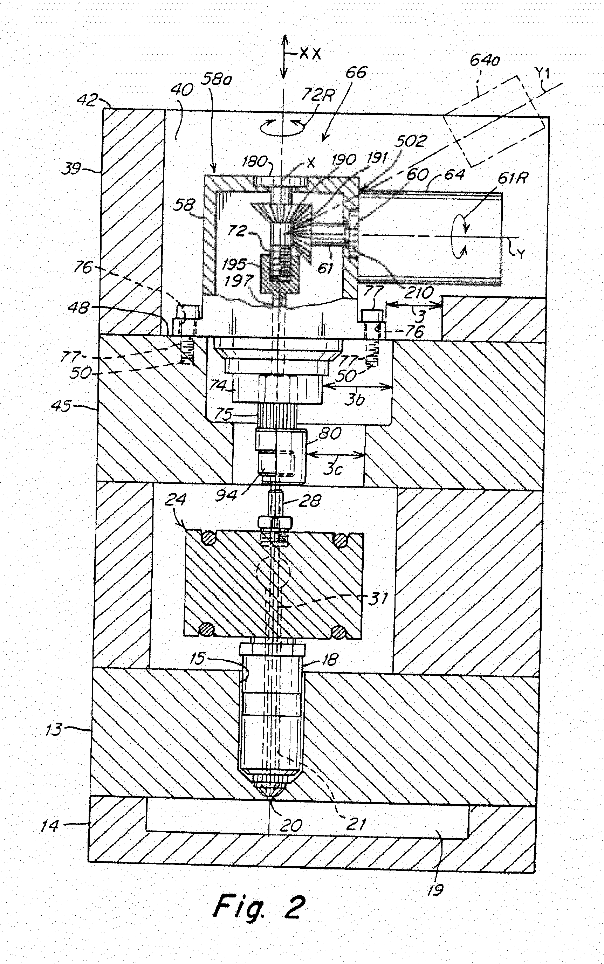

Figs. 1, 2 shows one embodiment of the invention comprised of an electric actuator 66 assembly that is comprised of an electric motor 64 drivably interconnected to a gear 72/190 in a non-coaxially aligned X-Y arrangement. The shaft 60 of the electrically driven motor 64 has an axis Y, the shaft 60 being rotatably driven by electrical power, the shaft 60 being interconnected to a valve pin 50 through a bevel gear engagement between the head 190 of a screw 72 and the head 191 of an extension member 61 of the motor shaft 60. As can be readily imagined, the screw component 72 can alternatively have threads along its length (in place of the beveled head 190) which mesh with a worm at the end of extension 61 (in place of the beveled member 191). As shown, the axis Y of the shaft 60 is non-coaxially perpendicular to the axis X of the pin 50 and the actuating screw mechanism 72 such that axial forces which may occur along axis X are not transmitted along axis Y to the shaft 60.

In the FIGS. 1, 2 embodiment, the pin 50 has a nut 195 integrally forming the end of the pin 50 which is drivably interconnected to, i.e. screwably engaged with, the actuating screw 72. The pin 50 is slidably mounted in a complementary aperture 90 within manifold 24 for movement along its axis X within melt flow channe I20. The actuating screw 72 is mounted via disc 180 to housing 58 which is, in turn, fixedly mounted to manifold 24 such that screw 72 is drivably rotatable around axis X and axially stationary along axis X. Screw 72 is drivably rotatable around axis X via the screwable engagement between bevel gears 190,191. Shaft extension member 61 is coaxially connected to the motor shaft 60(via rigid connection between connecting disc 210 and a complementary connecting member attached to shaft60which is not shown) such that as the shaft 60 is rotatably driven around axis Y the extension member61 and its associated bevel gear191are simultaneously rotatably driven around axis Y. As can be readily imagined, as screw 72 is rotatably driven around axis X via the meshed bevel gears 190, 191, pin 50 is translationally driven along axis X via the screwable engagement between nut end 195 and screw 72. Thus the screw 72 acts as an actuating member to and through which axial forces are transmitted to and from pin50.

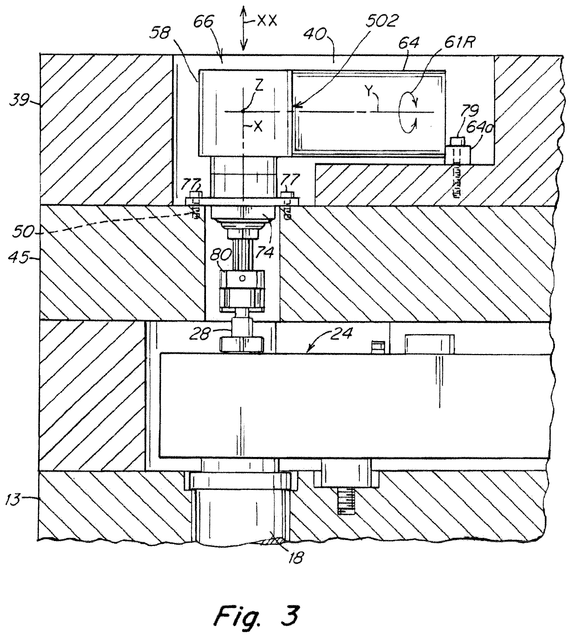

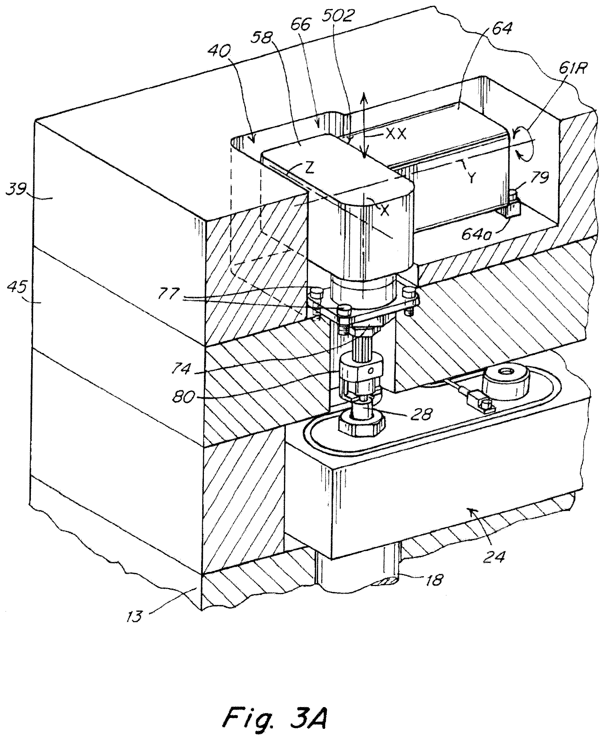

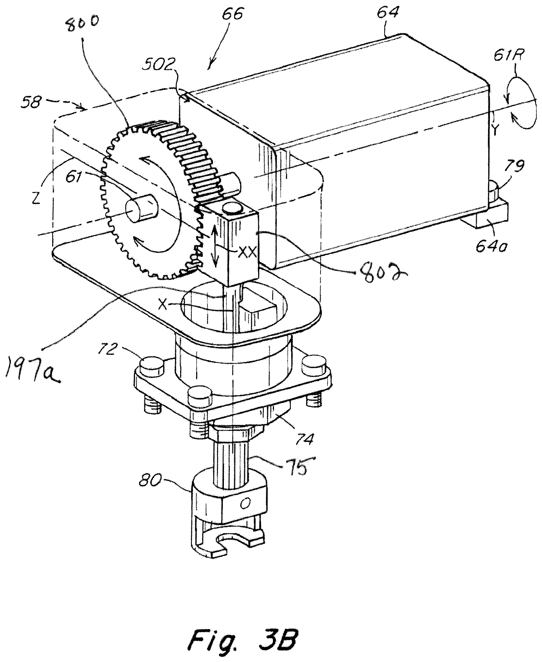

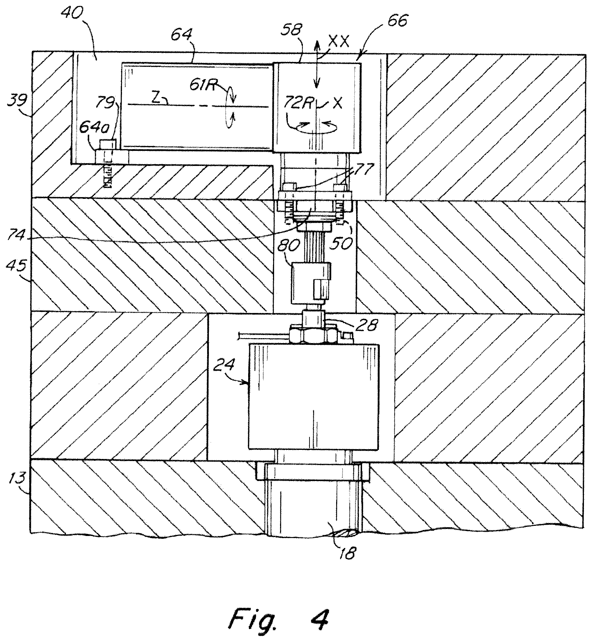

Figs. 1, 3A, 3B, 4, 5 show an embodiment where the electric motor 64 component of the actuator 66 is coupled to the top clamp plate 39 via bolts 79 interconnecting motor housing portion 64a and plate 39. Complementary tapped holes are provided in the upper surface of the upper mounting plate 39 for receiving the bolts 79 and securing the motor housing 64 to the plate 39. This prevents rotational and other movement of the housing 64 and gear box housing 58 with respect to the mounting plates 39, 45 and manifold 24 and the injection molding apparatus generally. Extending downwardly from the screw 195 is a cylindrical projection 74 from which the downstream neck 75 of the coupler screw extends. Coupled to the downstream end of the neck 75 is the actuator coupling 80 and extending axially downstream from the coupling 80 is the valve pin 31. Figs. 3, 4 show an alternative mounting of the motor housing 64 to the top clamp plate 39 via an extension 64a and bolt 79, as alternative to the mounting of the transmission gear housing 58 to the top clamping or mounting plate 45 via bolts 77.

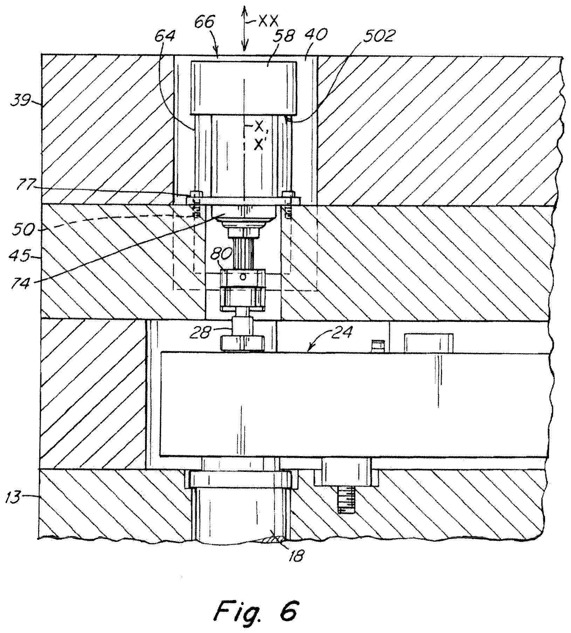

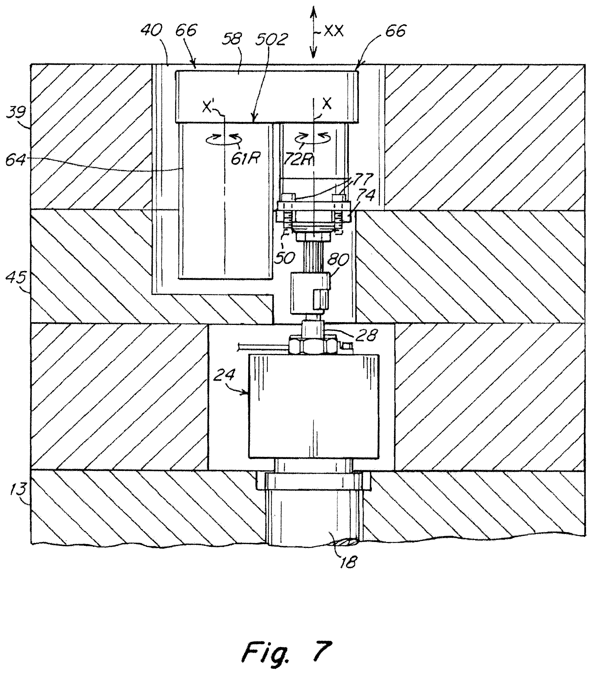

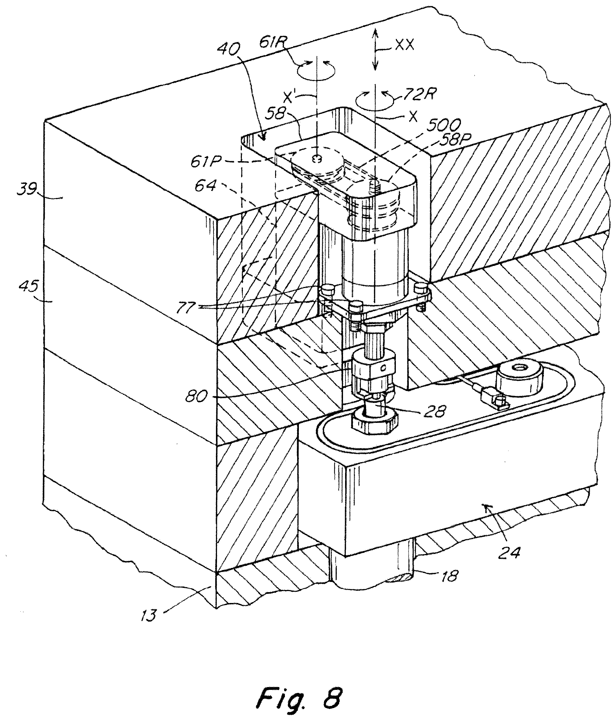

Figs. 2, 6, 7, 8, 9 show an alternative embodiment where the gear box 58 includes four bores 76, one in each corner of the housing, for receiving bolts 77 that removably couple the gear box housing 58 to the lower mounting plate 45. Four complementary tapped holes 50 are provided in the upper surface 48 of the lower mounting plate 45 for receiving the bolts 77 and securing the gear box housing 58 to the plate 45. This prevents rotational and other movement of the housing 58 and its attached motor 64 with respect to the mounting plates 39, 45 and manifold 24 and the injection molding apparatus generally. Extending downwardly from the screw 195 is a cylindrical projection 74 from which the neck 75 of the coupler screw extends. Coupled to the downstream end of the neck 75 is the actuator coupling 80 and extending axially downstream from the coupling 80 is the valve pin stem 31. Figs. 2-10 all show one alternative arrangement where the gear housing 58 is bolted 77 to the top clamp or mounting plate 45 as an alternative to mounting of the motor housing 64 to the top clamp or mounting plate 39.

The housings 58 and 64 are fixedly connected to each other by conventional attachment mechanism 502 such that when one of the housings 58 or 64 is fixedly bolted 77 or 79 to a clamp or mounting plate 39, 45, the other of the two housings 58 or 64 is fixedly mounted to the same plate via fixed connection between 502 the two housings 58, 64.

Figs. 1, 2 show the actuator 66 comprised of a transmission assembly 58a that is comprised of a gear box 58 assembled together with the other components of the system to form a stack that includes a nozzle 18 mounted in a receiving well 15 formed within a mold plate 13 in an injection molding stack arrangement. As shown a heated manifold 24 is disposed between the pair of upstream top clamping or mounting plates 39/45 and the downstream mold plates 13/14. The valve pin 31 is mounted to the manifold within a bushing 28 having a complementary internal bore for slidably receiving the pin 31 such that the pin can reciprocally travel XX along axis X. The valve pin 31 has a downstream distal tip end that opens and closes a gate aperture 20 that leads to the mold cavity 19. In use, the mounting plates 39, 45 and mold plates 13, 14 are fixedly secured together under high clamp pressure, so as to withstand high injection molding forces. A nozzle 18 extends through a bore 15 in the lower mold plate 14, and seats and unseats in the gate 20 to the injection mold cavity 19. The actuator 66 is disposed in a chamber 40 of the upper mounting plate 39, with a radial clearance 3 provided in at least one radial direction so as to facilitate the radial coupling and decoupling of the pin head adapter 94 and actuator coupling 80. Similarly, there is a radial clearance 3b/3c to allow the projecting neck 75 and adapter 80 to move radially in the plates.

As described in U.S. Patent No. 6,294,122 (the disclosure of which is incorporated herein by reference in its entirety as if fully set forth herein) the electric motor is powered and driven by electrical energy or power input to coils that typically rotatably drive a magnet that in turn rotatably drives motor shaft 61.

In the Figs. 1, 2 embodiment, the distal end of the rotor 61 of the motor 64 has a beveled gear head 191 that meshes with and rotatably drives a beveled gear head 190 formed on the shaft of a linear travelling XX screw 72 (linear travel converter) that comprise the transmission assembly 58a. As shown, the gear head 190 is integrally formed together with a shaft having a downstream end that has male threads forming a screw 72 that is screwably engaged within the female screws bored within the upstream head 195 of a linear conversion screw 197. The downstream distal end of the screw 197 is connected to actuator coupling 80 which removably receives the upstream head portion 94 of valve pin 31 as described in detail in U.S. Patent No. 8,091,202. The driven rotation motion 61R of motor shaft 61 is thus converted from rotatable motion to controllably driven linear motion XX along axis X of the valve pin 31 via the driven rotation of the gear screw 72 and driven linear movement of the linear conversion screw 197 via the screwable engagement of screw and head 195.

As shown in Figs. 1, 2 the arrangement or disposition of the motor axis Y is non-coaxial to the axis X of the transmission gear and screws 72, 195, 197 and valve pin 31. As shown the arrangement of the axes X and Y can be about 90 degrees relative to each other. Alternatively, the axis Y1 of the drive shaft can be disposed at any non-coaxial angle between zero and 180 degrees relative to the axis X of the transmission and valve pin, the design of the meshed gears 190, 191 being adapted to enable such an arrangement.

Figs. 3A, 3B shows another gearing arrangement where a circular gear 800 attached to distal end of motor drive shaft 61 is controllably rotatably drivable 61 R around axis Y to drive XX the gear rack 802 (linear travel converter) along axis X via meshing of the gears of gear 800 with the gears of rack 802, the rack 802 being fixedly attached to the upstream end of a linear traveler rod 197a that is interconnected at its downstream end to coupler 80. Thus the valve pin when coupled to coupler 80 is controllably drivable along the X axis by controlled driving of the shaft 61 of the motor around the perpendicular axis Y.

In another alternative embodiment shown in Figs. 4, 5, 6 the motor 64 housing (or the gear box housing 58) could be mounted to the top clamping plate or mounting plate in an arrangement such that the drive shaft 61 of the motor 64 is aligned along the Z axis and a gear attached to the distal end of the shaft is meshed with a complementary gear at the upstream end of a complementary linear travel converter screw or rod similar to those described above regarding the Figs. 1-3B embodiments to drive the valve pin along the non-coaxial axis X.

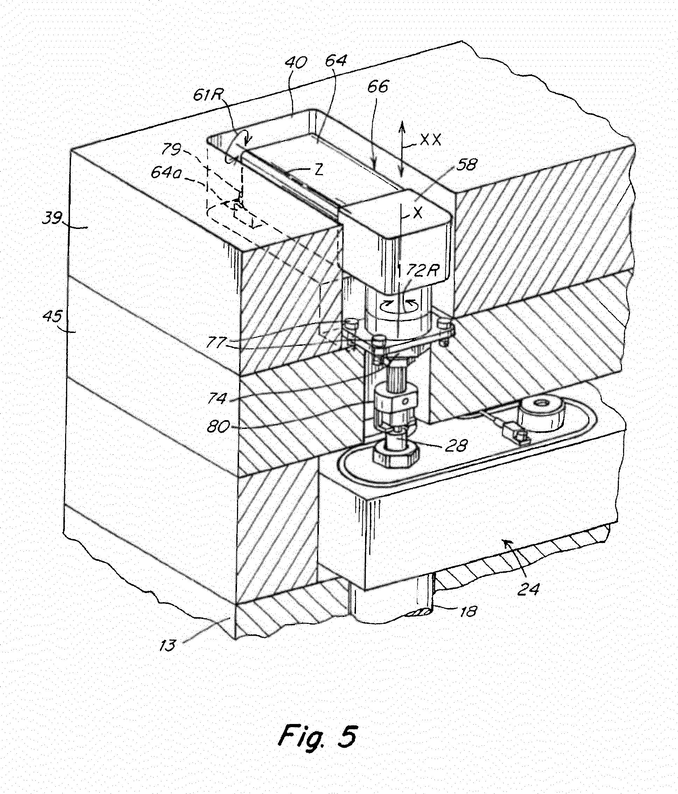

In the Figs. 5-9 embodiments, driven rotation movement 61R of a motor shaft 61 is similarly converted to linear movement XX via interconnection of the motor shaft 61 to a pulley 61P and interconnection of the transmission shaft to a transmission pulley 58P with the two pulleys 58P, 61P being rotatably interconnected by belt 500. In such an embodiment, the axis Y of the motor rotor 61 is non-coaxial to the axis X of the transmission, the axes X and Y shown as being disposed at 180 degrees to each other. Other non-coaxially aligned arrangements of the axes X and Y, other than 180 degrees, can be assembled using appropriate components to interconnect pulleys 58P, 61P.

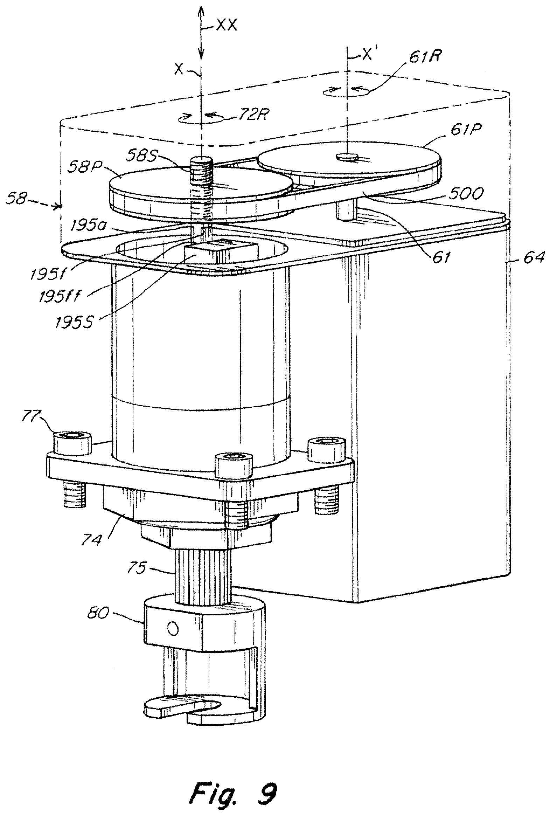

Fig. 9 shows an embodiment where the transmission pulley 58P has a central internal thread that screwably receives a complementary threaded screw shaft 58S that is driven axially XX by rotation of the pulley 58P. The downstream end of the screw shaft 58S is interconnected to a downstream linear drive stem 195a which is interconnected to or otherwise forms the valve pin 31 of the system. The drive stem 195a is driven linearly XX along X by screw shaft 58S. The drive stem 195a is adapted to be non-rotatable by formation of a flat surface 195f on the outer circumference of the stem 195a and by mounting a stationarily mounted stop member 195S having a complementary flat surface 195ff that is engaged against the flat surface 195f of the stem 195a to prevent rotation thereof. The stem 195a can be a separate part or can be formed as integral with the valve pin itself, in either case the valve pin being non-rotatably by virtue of the flats 195f, 195ff .

An electronic controller 176 can be interconnected to the electric motor. Such a controller is capable of precisely driving the electric coils according to any preprogrammed electronic program, circuit or microcontroller to in turn precisely drive the valve pin to any selected positions along the axis X such that the position of the tip end of the valve pin relative to the gate is precisely controlled over the course of an injection molding cycle.

A position sensor 178 can be used to sense the position of any component of the system that relates to the axial X of the valve pin 31. Such a sensor 178 can sense 177 the rotational or axial position of the transmission gear 190, 72, the transmission linear conversion screw 195, the axis of the rotor 61 of the motor 64 such, the internal screw within the motor that drives the rotor or the magnet that drives the rotor 61, or the position sensor can alternatively sense 179 the axial position of the valve pin 31 itself. The signal 177, 179 that indicates position is input to the controller 176 which can use such a real-time signal in a program to control the rate of drive of the motor rotor 61 and transmission components 190, 72, 195 which in turn control the velocity or rate of travel of upstream withdrawal or downstream closure of the valve pin 31 at selected times or over selected lengths of time over the course of an injection cycle.

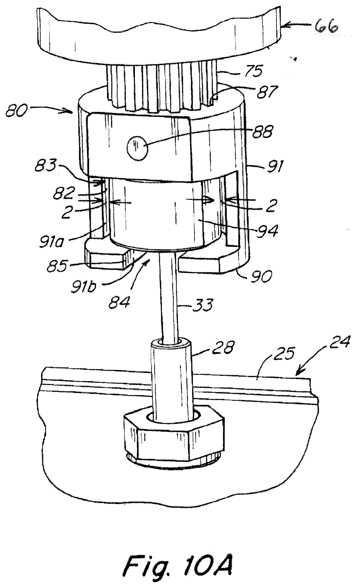

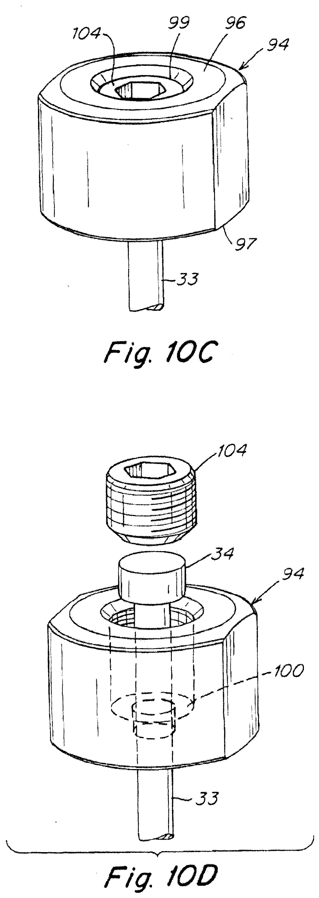

With reference to Figs. 10A-10M, the actuator assembly 66 is generically depicted as a box 66 for purposes of explanation as to how an assembly 66 as described above can be coupled, decoupled and moved laterally and upstream-downstream within a complementary receiving recess provided within plates 39, 45 such that the pin coupling can be coupled to and decoupled from the pin connector without having to dissemble the plates 39, 45 or the actuator 66. Although Figs. 10A-10M depict the actuator 66 as a single parallelepiped shaped box, the box 66 as shown in Figs. 10A-10M is analogous to the differently shaped assemblies 66 as described with reference to Figs. 1-9 at least regarding how the assembly can be coupled, decoupled and moved within the recess 40 formed within plates 39, 45.

As shown in Figs. 10A-10M the nozzle 18 is mounted in or on one or more metal (e.g. stainless steel) plates. The apparatus includes a heated manifold 24 and one or more other spacer, mounting or mold plates 13, 14. The manifold 24 is heated to maintain the nozzle 18 at an elevated temperature for delivery of the molten plastic. The mold cavity 19 and plates 13, 14 are typically maintained relatively cool by water cooling channels compared to the manifold 24 to enable solidification of the injected molten plastic to form a solid plastic article within the cavity of the mold.

The nozzle 18 is an elongated tubular article 19 typically made of stainless steel and having a central axial bore 21 through which the molten plastic travels to the gate 20 and into the mold cavity. Also in the nozzle bore, aligned along the central bore axis, is an axially elongated valve pin 30 having an axially elongated stem 31, which defines the valve pin axis AA. At one end of the stem, designed to seat and unseat in the nozzle gate for purposes of opening and closing the gate, and effectively starting and stopping flow of the molten plastic to the mold cavity, the stem has an angular or tapered lowermost tip 32. At the opposite or upstream (top) end 33 of the valve stem 31 is a pin head 34 which in the present embodiment comprises a radially enlarged cylindrical member that is receivable within a pin head adapter 94. The valve stem 31 also extends through an elongated plastic feed bore 27 in the heated manifold 24, typically also substantially coaxial with the nozzle bore. The valve stem 31 is guided into and mounted to the manifold 24 by a bushing 28 which receives, guides and mounts the valve stem 31 in the manifold plastic feed bore 27. The pin head 34 and any associated adapter 94 extends axially upstream beyond and from the bushing on the upstream or top side 25 of the manifold.

The pin head 34 may be formed integral with the valve stem 33 (as a single part) or it may be formed as a separate part and then secured to the upstream or top end of the valve stem by conventional means. It may or may not be radially enlarged but is typically formed in a radially enlarged configuration for ease of ready connectivity to and disconnectivity from an adapter component or pin coupling as described below.

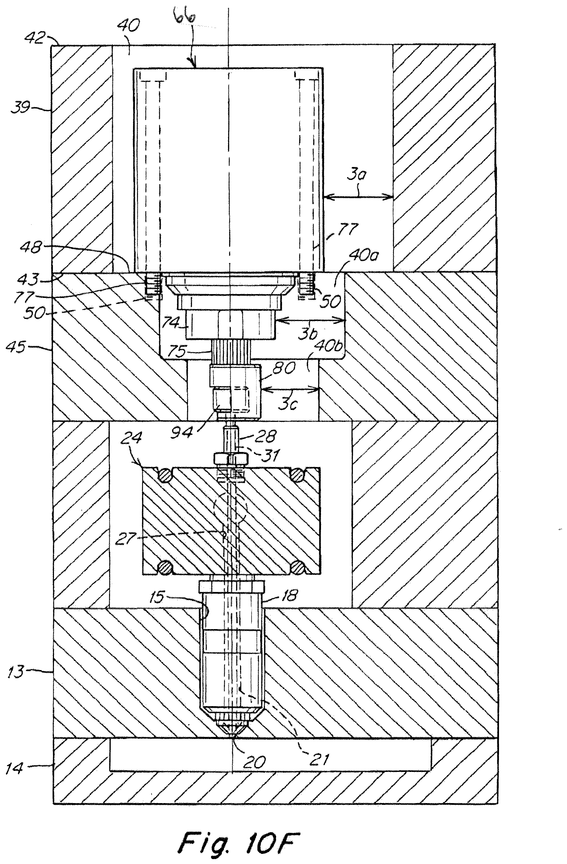

Above/upstream of the manifold 24, a pair of upper and lower mounting plates 39, 45 are provided in or on which the actuator 66 is mounted. The plates 39 and 45 are sometimes referred to as top clamping plates, clamping plates or backing plates. The actuator 66 via the transmission drives the valve pin stem axially A, X (linearly) along the coaxial bores of the manifold and nozzle. The housing of the actuator assembly 66 is disposed within a receiving aperture or chamber 40 in the upper mounting plate 39 and/or a chamber 40a in the lower mounting plate 45. As discussed above the assembly 66 can be fixed to the lower mounting plate 45 by threaded bolts 77 which extend into complementary threaded holes 50 in plate 45 so as to removably couple the actuator housing to the mounting plate 39 (see Fig. 10F). In alternative embodiments as discussed above the actuator housing can be attached via bolts 79.

The mounting plates 39, 45 are removably coupled to the mold typically by bolts or similar reversible fastening mechanisms. The chamber 40 of the upper mounting plate 39 (in which the actuator 66 is disposed) is actually a through bore in the upper plate 39 extending from the top surface 42 to the bottom surface 43. The neck 75 extends downwardly into a co-axial bore 40a/40b in the lower mounting plate 45 (40/40a/40b are coaxial).

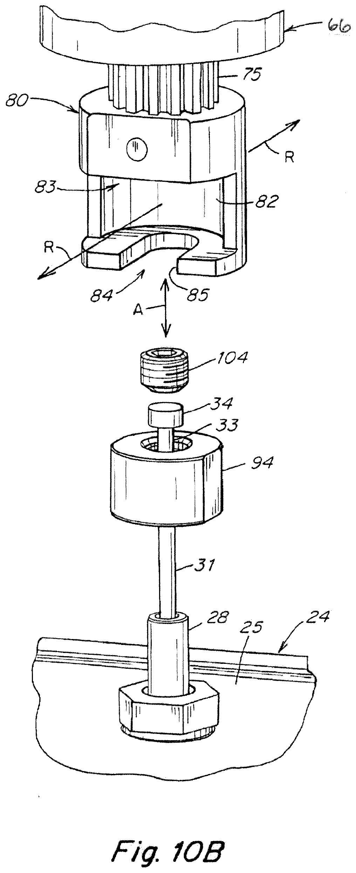

A pin coupling 80 is attached to or mounted on the neck 75 and is also disposed in the bore 40a/40b of the lower mounting plate 39 when the actuator is connected to the mounting plate. The coupling 80 includes a radial recess 83, disposed laterally (traverse to the elongated valve pin axis. The recess has a radial recess opening 82 that allows a pin head 34 or pin head adapter 94 to be radially inserted into and removed from the radial recess. The coupling 80 also includes a radial slot 84, connected (open) to the radial recess and extending downwardly to the lower surface 90 of the coupling 80. The radial slot has a radial slot opening 85 through which the valve stem 31 can be readily radially inserted or translated within (or removed from) the slot 84 while the adapter 94 is simultaneously radially inserted or translated within (or removed from) the radial recess 82. The coupling 80 has walls 91 that form and act as a housing for the radial recess 83 and radial slot 84. As shown, the pin connector 94 and the recess 83 and recess opening 84 are configured to have a complementary geometry, size, shape and configuration so as to enable the pin connector to be received within the recess 83 and fully surrounded and contained within walls 91 and also to require that the pin connector 94 is receivable within and removable from the recess 83 only by movement of the pin connector 94 in a radial direction R, Fig. 10B, transverse to the axial path of travel A of the neck 75. The pin connector 94 is slidable by manual force along radial direction R into and out of the recess 83 and recess opening 84. As shown when the pin connector 94 is slid into and out of recess 83 and opening 84, the pin stem 31 is simultaneously slidable radially through slot opening 85 into slot 84. The walls 91 act to retain and couple the pin connector 94 and associated pin stem 31 to the neck 75 when the connector 94 is received within recess 83 and stem 31 in slot 84.

In addition, the radial recess 82 is sized and configured to provide a radial clearance 2 in all radial directions between the valve pin adapter 94 and the recess 82 when/while the adapter is received and coupled within the recess 82 of the coupling 80. This radial clearance 2 allows movement in any radial direction of the valve pin adapter while it is mounted in the recess of the actuator coupling, so as to accommodate differences in thermal expansion between various components of the injection molding apparatus such as between the manifold 24 and the mounting plates 39, 45. As previously described, the valve stem 31 is mounted to a manifold 24 when the system is assembled, the manifold being heated during the course of startup to a higher temperature than the relatively cold mounting plates 39, 45 and cold actuator 66. During the time when the manifold 24 is being heated to a higher temperature than the mounting plates and actuator, it is desirable to provide a radial clearance to allow the valve pin assembly (pin 30 and adapter 94), which is mounted to the manifold by the bushing 28 and travels radially therewith and is also being heated via the manifold, to move radially together with the manifold with respect to the mounting plate and the axial path of travel of the actuator so as to prevent the application of undesirable side bending forces on the valve pin assembly. These side forces may bend or break the valve stem or otherwise interfere with proper alignment and operation of the valve pin assembly and actuator.

Figs. 10A, 10B show one embodiment of the coupling apparatus in an assembled state (Fig. 10A) and a disassembled state (10B). In Fig.10A, the upper end of the valve pin is shown extending upwardly from a manifold bushing 28 secured to the top 25 of the manifold. The pin head 34 and attached adapter 94, at the top end of the valve pin, are disposed completely within the coupling 80 in Fig.10A. The adapter 94 is radially received in the radial recess 82 of the coupling 80, while the valve stem 31 resides in the radial slot 84 of the coupling. There is a radial clearance 2 provided between the interior surface 91a of the walls 91 defining the radial recess 82 and outside surface of the adapter 94, and between the walls 91b defining the radial slot 84 and valve stem 31, to allow for radial movement of the valve pin assembly (here the valve stem 31, pin head 34 and pin head adapter 94) with respect to the axial drive path A of the actuator 66. The actuator coupling 80 is connected to the spline shaft or neck 75 that is interconnected to the electric actuator motor, by a pin 88 which extends through a bore 87 in the coupling and into a bore in the shaft. This prevents rotation of the coupling relative to the actuator shaft.

Fig. 10B shows the disassembled pin coupling 80 and pin head adapter 94. A cylindrical set screw 104 having outer threads is adapted for threaded engagement with the pin head adapter 94. This is further illustrated in Fig. 10C-10D. The pin head adapter 94 has a central axial through bore 99 extending from the top surface 96 to the bottom surface 97 of the adapter. The bore receives the upper end of the valve stem and pin head 34. The pin head 34 sits on a shoulder 100 in the central bore and is secured in the adapter 94 by screwing the set screw 104 into a threaded upper portion of the bore, creating a pressure engagement of the pin head and adapter. In this embodiment, the adapter essentially functions as an enlarged pin head. In another embodiment, the adapter may not be required, as the pin head itself could be disposed in the radial recess of the actuator coupling.

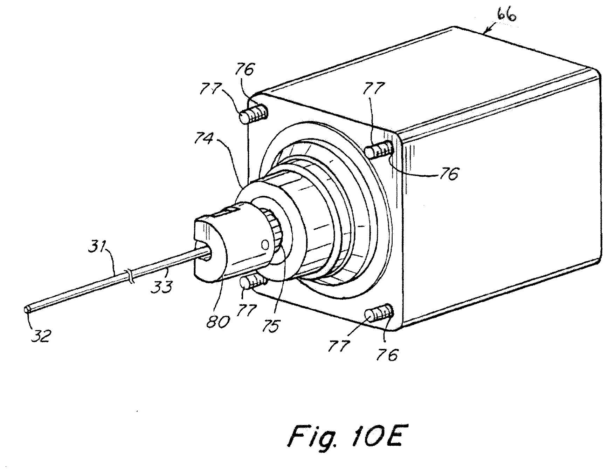

Fig. 10E shows the actuator housing including four bores 76, one in each corner of the housing, for receiving bolts 77 that removably couple the motor or gear housing 58, 64 to the lower mounting plate 45. Four complementary tapped holes 50 are provided in the upper surface 48 of the lower mounting plate 45 for receiving the bolts 77 and securing the motor housing to the plate. This prevents rotational and other movement of the housing of the motor with respect to the mounting plates and manifold and the injection molding apparatus generally. Extending downwardly from the motor or gear housing 58, 64 is a cylindrical projection 74 from which the neck 75 extends. Coupled to the downstream end of the neck 75 is the actuator coupling 80 and extending axially downstream from the coupling 80 is the valve stem 31.

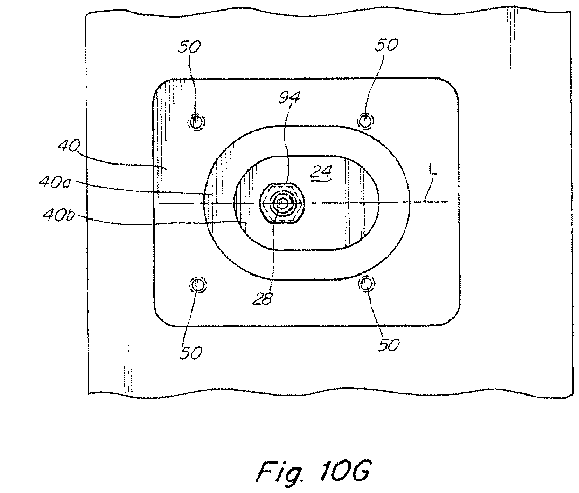

Fig. 10F is a cross section showing the injection molding stack. As previously described, a heated manifold 24 is disposed between the mounting plates 39/45 and mold plates 13/14. In use, the mounting plates and mold plates are fixedly secured together under high clamp pressure, so as to withstand high injection molding forces. A nozzle 18 extends through a bore 15 in the lower mold plate 14, and seats and unseats in the gate 20 to the injection mold cavity. The actuator 66 housing is disposed in a chamber 40 of the upper mounting plate 39, with a radial clearance 3 provided in at least one radial direction so as to facilitate the radial coupling and decoupling of the pin head adapter and actuator coupling. Similarly, there is a radial clearance 3b/3c to allow the neck 75 and adapter 80 to move radial in the plates. Fig. 10G is a top plan view of the apparatus of Fig. 10F, but with the electric motor removed. The chamber 40 has a rectilinear cross section. Below the chamber 40, the upper bore 40a has an oval cross section, and the lower bore 40b also has an oval but smaller, cross section, providing a radial clearance along the long axis L of the oval, to facilitate the assembly and disassembly steps described below.

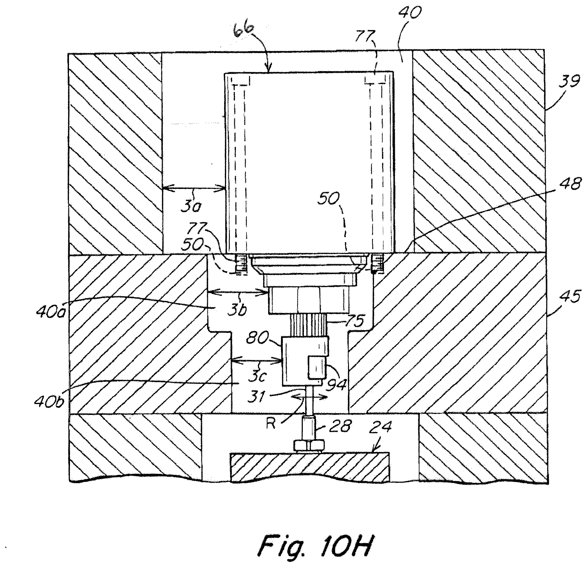

Figs. 10H - 10M illustrate a variety of steps for decoupling the actuator from the mounting plate 39 and for decoupling the valve pin assembly 30, 94 from the actuator coupling 80 and the mounting plate 39, 45, according to one embodiment. In Fig. 10H, the actuator is shown coupled to the valve pin assembly, with the actuator secured to the lower mounting plate and the valve pin assembly mounted in the actuator coupling. This illustrates the actuator and valve pin assembly as assembled during the injection molding cycle, wherein the axial drive path of travel XX of the actuator is substantially axially aligned with the valve stem axis, as the valve stem extends through the axis of the plastic feed bores of the manifold 27 and nozzle 18. The mounting plates 39 45 are clamped to the mold 12 with the manifold 24 secured between the mounting plates and mold.

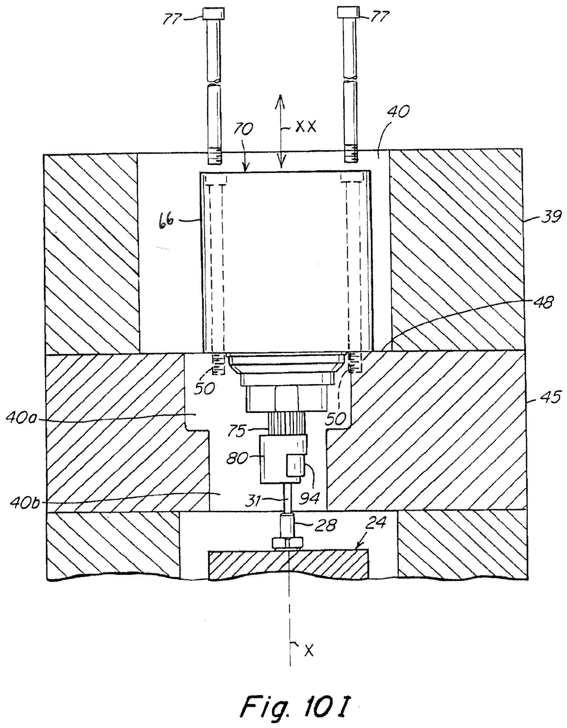

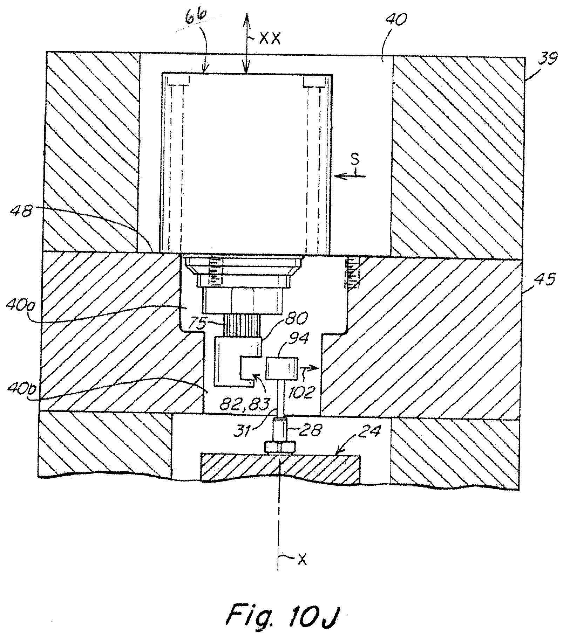

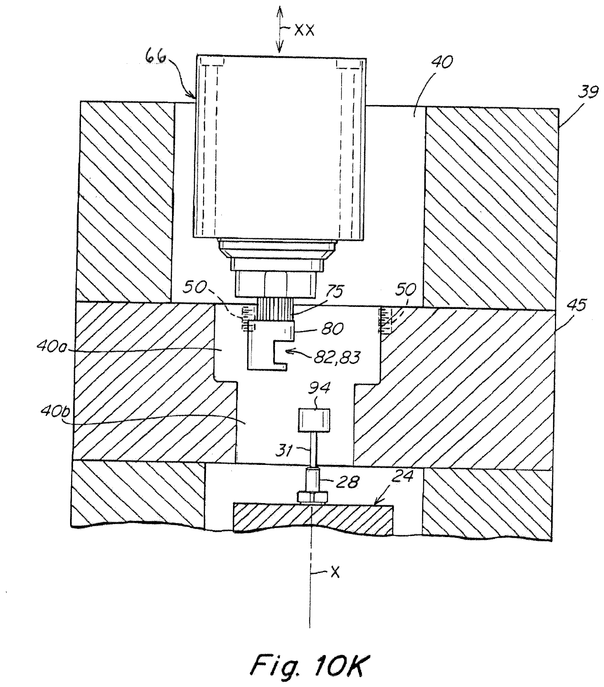

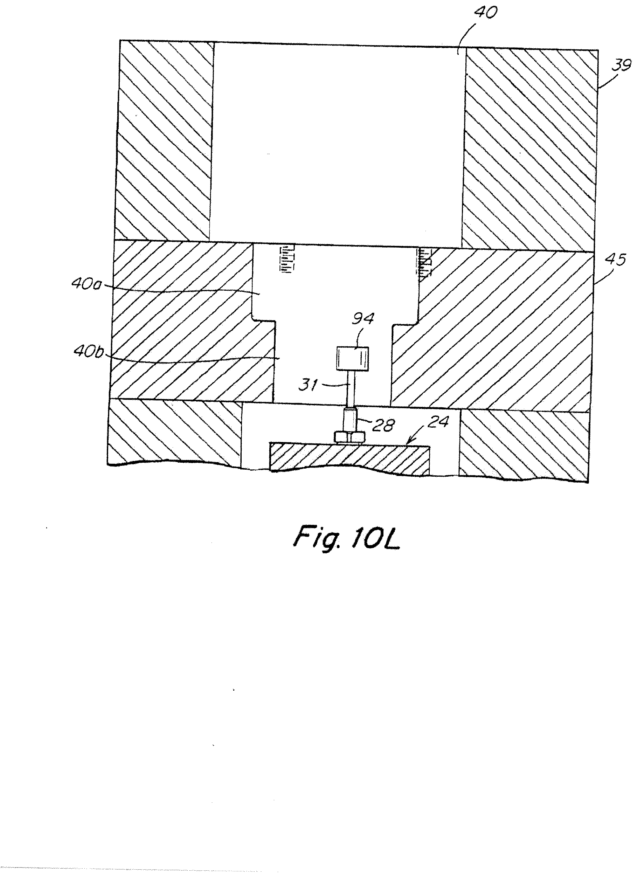

In Fig. 10I the bolts 77 are decoupled from the complementary receiving apertures 50 in the clamp plate 39 thus decoupling the actuator 66 housing from the clamp plate 45. As shown the housing of the actuator 66 and associated neck 75 are disposed upon decoupling of the housing within the plate receiving apertures 40, 40a, 40b. In Fig. 10J, the first two steps of disassembly have been performed. The bolts have been removed and then the actuator 66 housing is moved laterally or radially in direction S so as to decouple pin connector 94 from coupling 80 by sliding the connector 94 radially 102, (Fig. 10J) out of the recess 82, 83 of the coupling. Upon such decoupling of the connector 94, the pin stem 31 and associated parts such as the pin head 34 and adapter 94 and set screw 104 remain behind mounted to the manifold 24 while the actuator 66, is still disposed on the plate 45 and within the recesses 40, 40a, 40b of the mounting plates 39, 45. In a further subsequent operation, the actuator 66 can be removed entirely, Figs. 10K, 10L, for replacement or repair of the actuator, from the recesses 40, 40a. During this operation the valve pin assembly again remains stationary and behind mounted to the manifold and does not require removal of the pin 30.

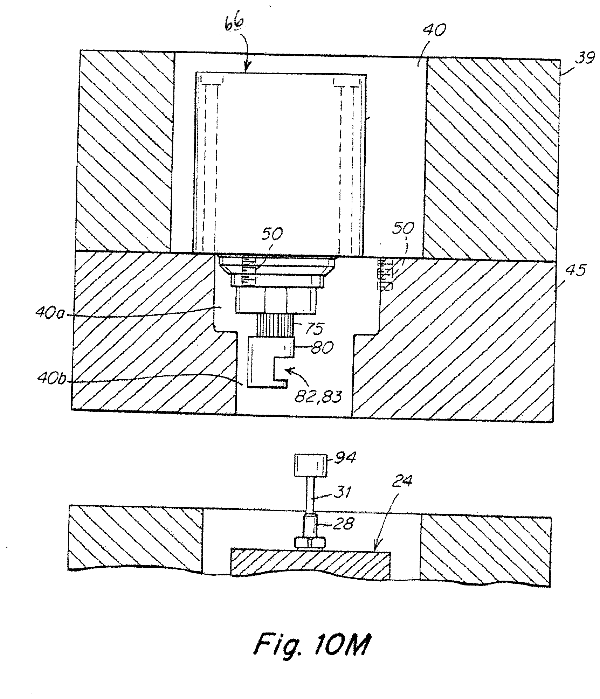

With reference to Fig. 10M, alternatively to removal of only the actuator 66, the mounting plates 39 and/or 45 can also be removed alone or together with the actuator 66 from the mold 12 once the actuator is decoupled from the pin connector 94 without requiring removal of the valve pin 30 (and pin connector 94) from the manifold or nozzle. Thus either the clamp plates 39, 45 can be removed from the system once the pin is decoupled from the actuator coupling 80, or the actuator 66 can removed from the system once the pin is decoupled from the actuator coupling 80, or both the plates and the actuator can be removed from the system once the pin is decoupled from the actuator coupling 80, all such removals being accomplished without removal of the pin 30 from the manifold or nozzle.

## Claims

1. An apparatus for controlling the rate of flow of fluid mold material from an injection molding machine to a mold cavity (19), the apparatus comprising:
a manifold (24) that receives an injection fluid mold material, the manifold (24) having a delivery channel that delivers the injection fluid mold material under an injection pressure to a gate (20) of a mold cavity (19) disposed within a mold, the gate (20) being controllably opened and closed by a valve pin (31) having a pin axis (X), the valve pin (31) being slidably mounted for reciprocal upstream and downstream linear movement along the pin axis (X) such that a downstream end of the valve pin (31) is drivable into and out of open and closed positions relative to the gate (20),
an electric actuator (66) comprising an electric motor comprised of a motor housing (64) that houses a drive shaft (60) having a drive gear (191) and a drive axis (Y) that is rotatably mounted within the motor housing (64) and is drivably rotatable around the drive axis (Y) by a source of electrical power or energy and a transmission (58a) comprised of a gear shaft rotatably mounted within a transmission housing (58), the gear shaft having a gear axis (X) and a transmission gear (72, 190, 195, 197) drivably rotatable around the gear axis (X),
the drive gear (191) and the transmission gear (72, 190, 195, 197) being drivably interconnected and arranged such that the drive axis (Y) and the gear axis (X) are non-coaxially mounted or disposed relative to each other and such that driven rotation of the drive gear (191) around the drive axis (Y) rotatably drives the gear shaft around the gear axis (X),
a linear travel converter (72, 802) comprising a travel shaft having a travel axis (X), the gear shaft being interconnected to an upstream end of the linear travel converter (72, 802) and the valve pin (31) being interconnected to a downstream end of the linear travel converter (72, 802),
the interconnection between the converter (72, 802) and the gear shaft being adapted to convert rotation of the gear shaft to linear travel of the travel shaft along the travel axis (X),
the linear travel converter (72, 802) being mounted for controllable upstream and downstream linear travel (XX) together with the valve pin (31) via the interconnection of the downstream end of the linear travel converter (72, 802) to the valve pin (31),
wherein the motor housing (64) and the transmission housing (58) are fixedly connected to each other and one or the other of the motor housing (64) and the transmission housing (58) are directly removably attached to a top clamping or mounting plate (39, 45) that is mounted upstream of the manifold (24) and fixedly interconnected to the mold.

2. The apparatus of claim 1 wherein motor housing (64) is removably attached to the top clamping or mounting plate (39, 45) and the transmission housing (58) is removably attached to the motor housing (64).

3. The apparatus of claim 1 wherein the transmission housing (58) is removably attached to the top clamping or mounting plate (39, 45) and the motor housing (64) is removably attached to the transmission housing (58).

4. The apparatus of claim 1 wherein the actuator (66) is interconnected to a controller (176) that includes instructions that instruct the actuator (66) to drive the valve pin (31) upstream continuously beginning from the closed position to one or more intermediate upstream positions at one or more intermediate rates of travel that are less than a maximum velocity at which the actuator (66) is capable of driving the valve pin (31) for either a predetermined amount of time or for a predetermined length of upstream travel.

5. The apparatus of claim 4 wherein the actuator (66) includes instructions that instruct the actuator (66) to drive the valve pin (31) continuously upstream from the one or more intermediate upstream positions to a maximum upstream position at one or more high rates of travel that are equal to or greater than the one or more intermediate rates of travel.

6. The apparatus of claim 4 further comprising a position sensor (178) that senses a position of either the actuator (66) or the valve pin (31),
the position sensor (178) sensing the position of the actuator (66) or the valve pin (31) and sending a signal indicative of the position of the actuator (66) or the valve pin (31) to the controller (176);
the controller (176) instructing the actuator (66) to drive the valve pin (31) continuously upstream from the one or more intermediate upstream positions at the one or more high rates of travel on detection by the position sensor (178) of the valve pin (31) at the one or more intermediate upstream positions.

7. The apparatus of claim 1 wherein the drive gear (191) and the transmission gear (72, 190, 195, 197) are rotatably interconnected via gears or via belt and pulley.

8. The apparatus of claim 1 wherein the controller (176) includes instructions that instruct the actuator (66) to drive the valve pin (31) at one or more high rates of downstream travel that are equal to or less than a maximum rate of downstream travel at which the actuator (66) is capable of driving the valve pin (31) when the valve pin (31) is disposed at a maximum upstream position during the course of an injection cycle,
the controller (176) including instructions that instruct the actuator (66) to drive the valve pin (31) at one or more intermediate rates of downstream travel that are less than the one or more high rates of downstream travel on expiration of a predetermined amount of time or for a predetermined amount of downstream travel of the valve pin (31) from the maximum upstream position.

9. The apparatus of claim 8 further comprising a position sensor (178) that senses a position of either the actuator (66) or the valve pin (31),
the position sensor sensing the position of the actuator (66) or the valve pin (31) and sending a signal indicative of the position of the actuator (66) or the valve pin (31) to the controller (176);
the controller (176) instructing the actuator (66) to drive the valve pin (31) continuously downstream at the one or more intermediate rates of downstream travel on detection by the position sensor (178) of the valve pin (31) having travelled the predetermined amount of downstream travel from the maximum upstream position.

10. A method of assembling an apparatus for controlling the rate of flow of fluid mold material from an injection molding machine to a mold cavity (19), the apparatus comprising a manifold (24) that receives an injection fluid mold material, the manifold (24) having a delivery channel that delivers the injection fluid mold material under an injection pressure to a gate (20) of a mold cavity (19) disposed within a mold, the gate (20) being controllably opened and closed by a valve pin (31) having a pin axis (X), the valve pin (31) being slidably mounted for reciprocal upstream and downstream linear movement along the pin axis (X) such that a downstream end of the valve pin (31) is drivable into and out of open and closed positions relative to the gate (20), an electric actuator (66) comprising an electric motor comprised of a motor housing (64) that houses a drive shaft (60) having a drive gear (191) and a drive axis (Y) that is rotatably mounted within the motor housing (64) and is drivably rotatable around the drive axis (Y) by a source of electrical power or energy and a transmission (58a) comprised of a gear shaft rotatably mounted within a transmission housing (58), the gear shaft having a gear axis (X) and a transmission gear (72, 190, 195, 197) drivably rotatable around the gear axis (X),
the method comprising:
meshing and arranging the drive gear (191) and the transmission gear (72, 190, 195, 197) such that the drive axis (Y) and the gear axis (X) are disposed at a non-coaxial angle relative to each other and such that driven rotation of the drive gear (191) rotatably drives the gear shaft around the gear axis (X),
interconnecting a linear travel converter (72, 802) comprising a travel shaft having a travel axis (X) to an upstream end of the liner travel converter (72, 802) and interconnecting the valve pin (31) to a downstream end of the linear travel converter (72, 802),
adapting the interconnection between the converter (72, 802) and the gear shaft to convert rotation of the gear shaft to linear travel of the travel shaft along the travel axis (X),
mounting the linear travel converter (72, 802) for controllable upstream and downstream linear travel (XX) together with the valve pin (31) via the interconnection of the downstream end of the linear travel converter (72, 802) to the valve pin (31),
fixedly connecting the motor housing (64) and the transmission housing (58) to each other
directly removably attaching one or the other of the motor housing (64) or the transmission housing (58) to a top clamping or mounting plate (39, 45) that is mounted upstream of the manifold (24) and fixedly interconnected to the mold.

## Patentansprüche

1. Vorrichtung zum Steuern der Fließgeschwindigkeit von fluidischem Gießmaterial von einer Spritzgießmaschine zu einem Formenhohlraum (19), wobei die Vorrichtung aufweist:
einen Verteiler (24), der ein Spritzgießfluidmaterial empfängt, wobei der Verteiler (24) einen Zufuhrkanal aufweist, der das Spritzgießfluidmaterial unter einem Einspritzdruck einem Angusskanal (20) eines in einer Form angeordneten Formenhohlraums (19) zuführt, wobei der Angusskanal (20) durch einen Ventilstift (31) mit einer Stiftachse (X) steuerbar geöffnet und geschlossen wird, wobei der Ventilstift (31) gleitend montiert ist für eine hinund hergehende stromaufwärtsseitige und stromabwärtsseitige lineare Bewegung entlang der Stiftachse (X) derart, dass ein stromabwärtsseitiges Ende des Ventilstifts (31) in eine offene und eine geschlossene Position relativ zum Angusskanal (20) und aus diesen Positionen heraus antreibbar ist;
einen elektrischen Aktuator (66) mit einem Elektromotor, der ein Motorgehäuse (64) aufweist, das eine Antriebswelle (60) mit einem Antriebszahnrad (191) und einer Antriebsachse (Y) aufnimmt, die drehbar im Motorgehäuse (64) montiert ist und durch eine elektrische Leistungs- oder Energiequelle um die Antriebsachse (Y) drehbar antreibbar ist, und mit einem Getriebe (58a), das eine Getriebewelle aufweist, die in einem Getriebegehäuse (58) drehbar montiert ist, wobei die Getriebewelle eine Getriebeachse (X) und ein um die Getriebeachse (X) drehbar antreibbares Transmissionszahnrad (72, 190, 195, 197) aufweist,
wobei das Antriebszahnrad (191) und das Transmissionszahnrad (72, 190, 195, 197) antriebsmäßig miteinander verbunden und derart angeordnet sind, dass die Antriebsachse (Y) und die Getriebeachse (X) nicht koaxial zueinander montiert oder angeordnet sind, und derart, dass die angetriebene Drehbewegung des Antriebszahnrads (191) um die Antriebsachse (Y) die Getriebewelle um die Getriebeachse (X) drehbar antreibt;
einen Linearhubwandler (72, 802) mit einer Verfahrwelle mit einer Verfahrachse (X), wobei die Getriebewelle mit einem stromaufwärtsseitigen Ende des Linearhubwandlers (72, 802) verbunden ist und der Ventilstift (31) mit einem stromabwärtsseitigen Ende des Linearhubwandlers (72, 802) verbunden ist,
wobei die Verbindung zwischen dem Wandler (72, 802) und der Getriebewelle dazu eingerichtet ist, die Drehbewegung der Getriebewelle in eine lineare Verfahrbewegung der Verfahrwelle entlang der Verfahrachse (X) umzuwandeln,
der Linearhubwandler (72, 802) für eine steuerbare stromaufwärtsseitige und stromabwärtsseitige lineare Verfahrbewegung (XX) zusammen mit dem Ventilstift (31) über die Verbindung des stromabwärtsseitigen Endes des Linearhubwandlers (72, 802) mit dem Ventilstift (31) montiert ist,
wobei das Motorgehäuse (64) und das Getriebegehäuse (58) fest miteinander verbunden sind und eine Komponente unter dem Motorgehäuse (64) und dem Getriebegehäuse (58) direkt lösbar an einer oberen Klemm- oder Montageplatte (39, 45) befestigt ist, die stromaufwärts vom Verteiler (24) montiert und fest mit der Form verbunden ist.

2. Vorrichtung nach Anspruch 1, wobei das Motorgehäuse (64) an der oberen Klemm- oder Montageplatte (39, 45) lösbar befestigt ist und das Getriebegehäuse (58) am Motorgehäuse (64) lösbar befestigt ist.

3. Vorrichtung nach Anspruch 1, wobei das Getriebegehäuse (58) an der oberen Klemm- oder Montageplatte (39, 45) lösbar befestigt ist und das Motorgehäuse (64) am Getriebegehäuse (58) lösbar befestigt ist.

4. Vorrichtung nach Anspruch 1, wobei der Aktuator (66) mit einer Steuereinheit (176) verbunden ist, die Anweisungen enthält, die den Aktuator (66) anweisen, den Ventilstift (31) kontinuierlich stromaufwärts beginnend an der geschlossenen Position zu einer oder mehreren stromaufwärtsseitigen Zwischenpositionen mit einer oder mehreren mittleren Verfahrgeschwindigkeiten, die kleiner sind als eine maximale Geschwindigkeit, mit der der Aktuator (66) den Ventilstift (31) antreiben kann, entweder für eine vorgegebene Zeitdauer oder über eine vorgegebene Länge des stromaufwärtsseitigen Verfahrwegs anzutreiben.

5. Vorrichtung nach Anspruch 4, wobei der Aktuator (66) Anweisungen aufweist, die den Aktuator (66) anweisen, den Ventilstift (31) kontinuierlich stromaufwärts von der einen oder den mehreren stromaufwärtsseitigen Zwischenpositionen zu einer maximalen stromaufwärtsseitigen Position mit einer oder mehreren hohen Verfahrgeschwindigkeiten anzutreiben, die größer oder gleich der einen oder den mehreren mittleren Verfahrgeschwindigkeiten sind.

6. Vorrichtung nach Anspruch 4, ferner mit einem Positionssensor (178), der eine Position entweder des Aktuators (66) oder des Ventilstifts (31) erfasst,
wobei der Positionssensor (178) die Position des Aktuators (66) oder des Ventilstifts (31) erfasst und ein Signal, das die Position des Aktuators (66) oder des Ventilstifts (31) anzeigt, an die Steuereinheit (176) überträgt,
wobei die Steuereinheit (176) den Aktuator (66) anweist, den Ventilstift (31) kontinuierlich stromaufwärts von der einen oder den mehreren stromaufwärtsseitigen Zwischenpositionen mit der einen oder den mehreren hohen Verfahrgeschwindigkeiten anzutreiben, wenn der Positionssensor (178) die Position des Ventilstifts (31) an der einen oder den mehreren stromaufwärtsseitigen Zwischenpositionen erfasst.

7. Vorrichtung nach Anspruch 1, wobei das Antriebszahnrad (191) und das Transmissionszahnrad (72, 190, 195, 197) über Zahnräder oder über einen Riemen und eine Riemenscheibe drehbar miteinander verbunden sind.

8. Vorrichtung nach Anspruch 1, wobei
die Steuereinheit (176) Anweisungen enthält, die den Aktuator (66) anweisen, den Ventilstift (31) mit einer oder mehreren hohen stromabwärtsseitigen Verfahrgeschwindigkeiten anzutreiben, die kleiner oder gleich einer maximalen stromabwärtsseitigen Verfahrgeschwindigkeit sind, mit der der Aktuator (66) den Ventilstift (31) antreiben kann, wenn der Ventilstift (31) während eines Einspritzzyklus an einer maximalen stromaufwärtsseitigen Position angeordnet ist, und
die Steuereinheit (176) Anweisungen enthält, die den Aktuator (66) anweisen, den Ventilstift (31) nach Ablauf einer vorgegebenen Zeitdauer oder über eine vorgegebene Länge des stromabwärtsseitigen Verfahrwegs des Ventilstifts (31) von der maximalen stromaufwärtsseitigen Position mit einer oder mehreren mittleren stromabwärtsseitigen Verfahrgeschwindigkeiten anzutreiben, die kleiner oder gleich der einen oder den mehreren hohen stromabwärtsseitigen Verfahrgeschwindigkeiten sind.

9. Vorrichtung nach Anspruch 8, ferner mit einem Positionssensor (178), der eine Position entweder des Aktuators (66) oder des Ventilstifts (31) erfasst;
wobei der Positionssensor die Position des Aktuators (66) oder des Ventilstifts (31) erfasst und ein Signal, das die Position des Aktuators (66) oder des Ventilstifts (31) anzeigt, an die Steuereinheit (176) überträgt;
wobei die Steuereinheit (176) den Aktuator (66) anweist, den Ventilstift (31) kontinuierlich stromabwärts mit der einen oder den mehreren mittleren stromabwärtsseitigen Verfahrgeschwindigkeiten anzutreiben, wenn der Positionssensor (178) erfasst hat, dass der Ventilstift (31) die vorgegebene Länge des stromabwärtsseitigen Verfahrwegs von der maximalen stromaufwärtsseitigen Position zurückgelegt hat.

10. Verfahren zum Montieren einer Vorrichtung zum Steuern der Fließgeschwindigkeit von Spritzgießfluidmaterial von einer Spritzgießmaschine zu einem Formenhohlraum (19), wobei die Vorrichtung aufweist:
einen Verteiler (24), der ein Spritzgießfluidmaterial empfängt, wobei der Verteiler (24) einen Zufuhrkanal aufweist, der das Spritzgießfluidmaterial unter einem Einspritzdruck einem Angusskanal (20) eines in einer Form angeordneten Formenhohlraums (19) zuführt, wobei der Angusskanal (20) durch einen Ventilstift (31) mit einer Stiftachse (X) steuerbar geöffnet und geschlossen wird, wobei der Ventilstift (31) für eine hin- und hergehende stromaufwärtsseitige und stromabwärtsseitige lineare Bewegung entlang der Stiftachse (X) gleitend montiert ist, so dass ein stromabwärtsseitiges Ende des Ventilstifts (31) in eine offene und eine geschlossene Position relativ zum Angusskanal (20) und daraus heraus antreibbar ist;
einen elektrischen Aktuator (66) mit einem Elektromotor, der ein Motorgehäuse (64) aufweist, das eine Antriebswelle (60) mit einem Antriebszahnrad (191) und einer Antriebsachse (Y) aufnimmt, die drehbar im Motorgehäuse (64) montiert ist und durch eine elektrische Leistungs- oder Energiequelle um die Antriebsachse (Y) drehbar antreibbar ist, und mit einem Getriebe (58a), das eine in einem Getriebegehäuse (58) drehbar montierte Getriebewelle aufweist, wobei die Getriebewelle eine Getriebeachse (X) und ein Transmissionszahnrad (72, 190, 195, 197) aufweist, das um die Getriebeachse (X) drehbar antreibbar ist,
wobei das Verfahren die Schritte aufweist:
Ineingriffbringen und Anordnen des Antriebszahnrades (191) und des Transmissionszahnrades (72, 190, 195, 197) derart, dass die Antriebsachse (Y) und die Getriebeachse (X) in einem nicht koaxialen Winkel relativ zueinander angeordnet sind, und derart, dass die angetriebene Drehbewegung des Antriebszahnrads (191) die Getriebewelle um die Getriebeachse (X) drehbar antreibt;
Verbinden einer Getriebewelle mit einem stromaufwärtsseitigen Ende des Linearhubwandlers (72, 802), der eine Verfahrwelle mit einer Verfahrachse (X) aufweist, und Verbinden des Ventilstifts (31) mit einem stromabwärtsseitigen Ende des Linearhubwandlers (72, 802);
Anpassen der Verbindung zwischen dem Wandler (72, 802) und der Getriebewelle zum Umwandeln der Drehbewegung der Getriebewelle in eine lineare Verfahrbewegung der Verfahrwelle entlang der Verfahrachse (X);
Montieren des Linearhubwandlers (72, 802) für eine steuerbare stromaufwärtsseitige und stromabwärtsseitige lineare Verfahrbewegung (XX) zusammen mit dem Ventilstift (31) über die Verbindung des stromabwärtsseitigen Endes des Linearhubwandlers (72, 802) mit dem Ventilstift (31);
festes Verbinden des Motorgehäuses (64) und des Getriebegehäuses (58) miteinander; und
direktes lösbares Befestigen einer Komponente unter dem Motorgehäuse (64) und dem Getriebegehäuse (58) an einer oberen Klemm- oder Montageplatte (39, 45), die stromaufwärts vom Verteiler (24) montiert und fest mit der Form verbunden ist.

## Revendications

1. Appareil pour commander le débit d'écoulement d'un matériau de moulage fluide d'une machine de moulage par injection vers une cavité de moule (19), l'appareil comprenant :
un collecteur (24) qui reçoit un matériau de moulage fluide d'injection, le collecteur (24) ayant un canal de distribution qui distribue le matériau de moulage fluide d'injection sous une pression d'injection à une entrée (20) d'une cavité de moule (19) disposée dans un moule, l'entrée (20) étant ouverte et fermée de manière commandable par une goupille de soupape (31) ayant un axe de goupille (X), la goupille de soupape (31) étant montée coulissante pour un mouvement linéaire alternatif vers l'amont et vers l'aval le long de l'axe de goupille (X), de sorte qu'une extrémité aval de la goupille de soupape (31) peut être entraînée dans et hors de positions ouverte et fermée par rapport à l'entrée (20),
un actionneur électrique (66) comprenant un moteur électrique constitué d'un carter de moteur (64) qui abrite un arbre d'entraînement (60) ayant un engrenage d'entraînement (191) et un axe d'entraînement (Y) qui est monté rotatif à l'intérieur du carter de moteur (64) et qui peut être entraîné en rotation autour de l'axe d'entraînement (Y) par une source de puissance ou d'énergie électrique et une transmission (58a) constituée d'un arbre d'engrenage monté rotatif à l'intérieur d'un carter de transmission (58), l'arbre d'engrenage ayant un axe d'engrenage (X) et un engrenage de transmission (72, 190, 195, 197) pouvant être entraîné en rotation autour de l'axe d'engrenage (X),
l'engrenage d'entraînement (191) et l'engrenage de transmission (72, 190, 195, 197) étant reliés en entraînement et agencés de telle sorte que l'axe d'entraînement (Y) et l'axe d'engrenage (X) sont montés ou disposés de manière non coaxiale l'un par rapport à l'autre et que la rotation entraînée de l'engrenage d'entraînement (191) autour de l'axe d'entraînement (Y) entraîne rotativement l'arbre d'engrenage autour de l'axe d'engrenage (X),
un convertisseur de déplacement linéaire (72, 802) comprenant un arbre de déplacement ayant un axe de déplacement (X), l'arbre d'engrenage étant relié à une extrémité amont du convertisseur de déplacement linéaire (72, 802) et la goupille de soupape (31) étant reliée à une extrémité aval du convertisseur de déplacement linéaire (72, 802),
la liaison entre le convertisseur (72, 802) et l'arbre d'engrenage étant adaptée à convertir la rotation de l'arbre d'engrenage en déplacement linéaire de l'arbre de déplacement le long de l'axe de déplacement (X),
le convertisseur de déplacement linéaire (72, 802) étant monté pour un déplacement linéaire vers l'amont et vers l'aval commandable (XX) conjointement avec la goupille de soupape (31) par l'intermédiaire de la liaison de l'extrémité aval du convertisseur de déplacement linéaire (72, 802) à la goupille de soupape (31),
dans lequel le carter de moteur (64) et le carter de transmission (58) sont reliés de manière fixe l'un à l'autre et l'un ou l'autre du carter de moteur (64) et du carter de transmission (58) sont fixés directement de manière amovible à une plaque de serrage ou de montage supérieure (39, 45) qui est montée en amont du collecteur (24) et reliée de manière fixe au moule.

2. Appareil selon la revendication 1, dans lequel le carter de moteur (64) est fixé de manière amovible à la plaque de serrage ou de montage supérieure (39, 45) et le carter de transmission (58) est fixé de manière amovible au carter de moteur (64).

3. Appareil selon la revendication 1, dans lequel le carter de transmission (58) est fixé de manière amovible à la plaque de serrage ou de montage supérieure (39, 45) et le carter de moteur (64) est fixé de manière amovible au carter de transmission (58).

4. Appareil selon la revendication 1, dans lequel l'actionneur (66) est relié à un dispositif de commande (176) qui inclut des instructions qui ordonnent à l'actionneur (66) d'entraîner la goupille de soupape (31) vers l'amont de manière continue depuis la position fermée jusqu'à une ou plusieurs positions amont intermédiaires à une ou plusieurs vitesses de déplacement intermédiaires qui sont inférieures à une vitesse maximale à laquelle l'actionneur (66) est capable d'entraîner la goupille de soupape (31) pendant un temps prédéterminé ou pendant une longueur prédéterminée de déplacement vers l'amont.

5. Appareil selon la revendication 4, dans lequel l'actionneur (66) inclut des instructions qui ordonnent à l'actionneur (66) d'entraîner la goupille de soupape (31) de manière continue vers l'amont depuis les une ou plusieurs positions amont intermédiaires jusqu'à une position amont maximale à une ou plusieurs vitesses de déplacement élevées qui sont égales ou supérieures aux une ou plusieurs vitesses de déplacement intermédiaires.

6. Appareil selon la revendication 4, comprenant en outre un capteur de position (178) qui détecte une position de l'actionneur (66) ou de la goupille de soupape (31),
le capteur de position (178) détectant la position de l'actionneur (66) ou de la goupille de soupape (31) et envoyant un signal indiquant la position de l'actionneur (66) ou de la goupille de soupape (31) au dispositif de commande (176) ;
le dispositif de commande (176) ordonnant à l'actionneur (66) d'entraîner la goupille de soupape (31) de manière continue vers l'amont depuis les une ou plusieurs positions amont intermédiaires aux une ou plusieurs vitesses de déplacement élevées lors de la détection par le capteur de position (178) de la goupille de soupape (31) aux une ou plusieurs positions amont intermédiaires.

7. Appareil selon la revendication 1, dans lequel l'engrenage d'entraînement (191) et l'engrenage de transmission (72, 190, 195, 197) sont reliés en rotation par des engrenages ou par une courroie et une poulie.

8. Appareil selon la revendication 1, dans lequel le dispositif de commande (176) inclut des instructions qui ordonnent à l'actionneur (66) d'entraîner la goupille de soupape (31) à une ou plusieurs vitesses élevées de déplacement vers l'aval qui sont égales ou inférieures à une vitesse maximale de déplacement vers l'aval à laquelle l'actionneur (66) est capable d'entraîner la goupille de soupape (31) lorsque la goupille de soupape (31) est disposée à une position amont maximale au cours d'un cycle d'injection,
le dispositif de commande (176) inclut des instructions qui ordonnent à l'actionneur (66) d'entraîner la goupille de soupape (31) à une ou plusieurs vitesses de déplacement intermédiaires vers l'aval qui sont inférieures aux une ou plusieurs vitesses élevées de déplacement vers l'aval à l'expiration d'une durée prédéterminée ou pour un montant prédéterminé de déplacement vers l'aval de la goupille de soupape (31) depuis la position amont maximale.

9. Appareil selon la revendication 8, comprenant en outre un capteur de position (178) qui détecte une position de l'actionneur (66) ou de la goupille de soupape (31),
le capteur de position détectant la position de l'actionneur (66) ou de la goupille de soupape (31) et envoyant un signal indiquant la position de l'actionneur (66) ou de la goupille de soupape (31) au dispositif de commande (176) ;
le dispositif de commande (176) ordonnant à l'actionneur (66) d'entraîner la goupille de soupape (31) de manière continue vers l'aval aux une ou plusieurs vitesses de déplacement intermédiaires vers l'aval lors de la détection par le capteur de position (178) que la goupille de soupape (31) a parcouru le montant prédéterminé de déplacement vers l'aval depuis la position amont maximale.

10. Procédé d'assemblage d'un appareil pour commander le débit d'écoulement d'un matériau de moulage fluide d'une machine de moulage par injection vers une cavité de moule (19), l'appareil comprenant un collecteur (24) qui reçoit un matériau de moulage fluide d'injection, le collecteur (24) ayant un canal de distribution qui distribue le matériau de moulage fluide d'injection sous une pression d'injection à une entrée (20) d'une cavité de moule (19) disposée dans un moule, l'entrée (20) étant ouverte et fermée de manière commandable par une goupille de soupape (31) ayant un axe de goupille (X), la goupille de soupape (31) étant montée coulissante pour un mouvement linéaire alternatif vers l'amont et vers l'aval le long de l'axe de goupille (X), de sorte qu'une extrémité aval de la goupille de soupape (31) peut être entraînée dans et hors de positions ouverte et fermée par rapport à l'entrée (20), un actionneur électrique (66) comprenant un moteur électrique constitué d'un carter de moteur (64) qui abrite un arbre d'entraînement (60) ayant un engrenage d'entraînement (191) et un axe d'entraînement (Y) qui est monté rotatif à l'intérieur du carter de moteur (64) et qui peut être entraîné en rotation autour de l'axe d'entraînement (Y) par une source de puissance ou d'énergie électrique et une transmission (58a) constituée d'un arbre d'engrenage monté rotatif à l'intérieur d'un carter de transmission (58), l'arbre d'engrenage ayant un axe d'engrenage (X) et un engrenage de transmission (72, 190, 195, 197) pouvant être entraîné en rotation autour de l'axe d'engrenage (X),
le procédé comprenant les étapes consistant à :
emboîter et agencer l'engrenage d'entraînement (191) et l'engrenage de transmission (72, 190, 195, 197) de sorte que l'axe d'entraînement (Y) et l'axe d'engrenage (X) sont disposés selon un angle non coaxial l'un par rapport à l'autre et que la rotation entraînée de l'engrenage d'entraînement (191) entraîne rotativement l'arbre d'engrenage autour de l'axe d'engrenage (X),
relier un convertisseur de déplacement linéaire (72, 802) comprenant un arbre de déplacement ayant un axe de déplacement (X) à une extrémité amont du convertisseur de déplacement linéaire (72, 802) et relier la goupille de soupape (31) à une extrémité aval du convertisseur de déplacement linéaire (72, 802),
adapter la liaison entre le convertisseur (72, 802) et l'arbre d'engrenage à convertir la rotation de l'arbre d'engrenage en déplacement linéaire de l'arbre de déplacement le long de l'axe de déplacement (X),
monter le convertisseur de déplacement linéaire (72, 802) pour un déplacement linéaire vers l'amont et vers l'aval commandable (XX) conjointement avec la goupille de soupape (31) par l'intermédiaire de la liaison de l'extrémité aval du convertisseur de déplacement linéaire (72, 802) à la goupille de soupape (31),
relier de manière fixe le carter de moteur (64) et le carter de transmission (58) l'un à l'autre,
fixer directement de manière amovible l'un ou l'autre du carter de moteur (64) ou du carter de transmission (58) à une plaque de serrage ou de montage supérieure (39, 45) qui est montée en amont du collecteur (24) et reliée de manière fixe au moule.
